# EUROPÄISCHE PATENTSCHRIFT

(11) **EP 2 465 717 B1**
(45) Veröffentlichungstag und Bekanntmachung des Hinweises auf die Patenterteilung: **13.04.2016**
(21) Anmeldenummer: 11193522.7
(22) Anmeldetag: 14.12.2011
(51) Int. Cl.: B60J 5/04, B21D 28/06, B21D 35/00

(54) **Verfahren zur Herstellung eines Türinnenbleches mit einem Trägerausschnitt und eines Türmodulträgers**
Method for producing an inner door sheet with a bearing section and a door module holder
Procédé de fabrication d'une tôle intérieure de porte dotée d'une section de support et d'un support de module de porte

(30) Priorität: 16.12.2010 DE 102010061293
(43) Veröffentlichungstag der Anmeldung: 20.06.2012
(73) Patentinhaber: ThyssenKrupp System Engineering GmbH, 74076 Heilbronn (DE)
(72) Erfinder: Neufang, Uwe, 66606 St. Wendel (DE)
(74) Vertreter: Lorenz, Bernd Ingo Thaddeus

(56) Entgegenhaltungen:
- WO-A1-02/32708
- WO-A1-97/06024
- DE-A1- 19 915 151

## Beschreibung

Die Erfindung betrifft ein Verfahren zur Herstellung eines Türinnenbleches mit einem Trägerausschnitt und eines Türmodulträgers, der zur Anordnung auf dem Türinnenblech in zumindest bereichsweiser Überdeckung des Trägerausschnitts vorgesehen ist.

Türmodulträger werden dazu genutzt, um verschiedene innerhalb einer Fahrzeugtür anzuordnende Komponenten und Anbauteile wie Türgriff, Schloss, Zentralverriegelung, Führungen für Fenster sowie daran angeschlossene Leitungen, Gestänge und Antriebe aufzunehmen. Des Weiteren können auch die Komponenten eines Seitenairbags auf dem Türmodulträger angeordnet werden. Die Bereitstellung eines separaten, an der entsprechenden Öffnung des Türinnenbleches vorgesehenen Türmodulträgers erlaubt es, die genannten Teile zunächst auf dem Türmodulträger vorzumontieren und dann als Baueinheit mit dem Türinnenblech zu verbinden. Gegebenenfalls ist auch noch eine Prüfung der einzelnen Bestandteile auf dem Türmodulträger möglich, bevor dieser an dem Türinnenblech befestigt wird. In dem montierten Zustand des Türmodulträgers trägt dieser auch zu einer gewissen Erhöhung der Stabilität der Fahrzeugtür bei. Ein solcher Türmodulträger ist beispielsweise aus der DE 196 54 956 A1 bekannt. Üblicherweise soll der Türmodulträger den Trägerausschnitt vollständig überdecken.

Türmodulträger werden in der Praxis sowohl aus Blech als auch aus Kunststoff gefertigt. Bei einer Herstellung aus Blech werden üblicherweise das Türinnenblech und der Türmodulträger aus separaten Platinen, d. h. Blechzuschnitten in jeweils zugeordneten Werkzeugsätzen hergestellt. Bei dem Türinnenblech werden dann ein Trägerausschnitt und üblicherweise auch ein Fensterausschnitt herausgetrennt und als Abfall entsorgt, wodurch sich ein schlechter Materialnutzungsgrad ergibt.

Vor diesem Hintergrund schlägt die DE 199 15 151 A1 einen Türmodulträger vor, der einen metallischen Grundkörper und zumindest an einem Teil seines Umfanges einen Kunststoffrand aufweist. Der metallische Grundkörper entspricht dabei dem zuvor zur Bildung des Trägerausschnittes aus dem Türinnenblech herausgetrennten Blechabschnitt. Um den Trägerausschnitt des Türinnenbleches überdecken zu können, muss aber eine vergrößerte Fläche bereitgestellt werden, wozu der zumindest abschnittsweise außen angesetzte Kunststoffrand vorgesehen ist. Der so vergrößerte Türmodulträger überdeckt den Trägerausschnitt und kann entsprechend mit einem Überlapp befestigt werden. Als Nachteil ergibt sich, dass die Herstellung des Türmodulträgers aus abschnittsweise unterschiedlichem Material aufwendig ist. Des Weiteren wird auch durch den an zumindest einem Teil des Umfanges vorgesehenen Kunststoff die Stabilität des Türmodulträgers erheblich reduziert, obwohl der metallische Grundkörper an sich eine hohe Festigkeit aufweist.

Die WO 02/32708 A1 betrifft ein Türinnenblech einer Fahrzeugtür mit integriertem Seitenaufprallschutz und seiner Herstellung. Das Türinnenblech ist aus einer insbesondere als tailored blank ausgebildeten Platine durch Tiefziehen geformt. Es besteht aus einer Schale, deren Boden auf der Innenseite der Schale von dem Seitenaufprallträger überspannt wird. Der Seitenaufprallträger besteht aus einem aus der Blechplatine seitlich freigeschliffenen Blechstreifen, der auch nach Umformung einstückig mit dem Türinnenblech verbunden ist. Aus einer zunächst ebenen Platine wird eine Grundform gebildet, welche ausgehend von der Ebene der Platine nur in eine Richtung verformt ist. Es wird dann eine Endform mit Wülsten gebildet, bei der der Seitenaufprallträger gegenüber einem Boden der gebildeten Schale in einem Abstand angeordnet ist. Eine weitere Umformung ist nicht vorgesehen. WO 97/06024 A1 offenbart ein Verfahren gemäß dem Oberbegriff des Anspruchs 1.

Vor diesem Hintergrund liegt der Erfindung die Aufgabe zugrunde, ein Verfahren zur Herstellung eines Türinnenbleches mit einem Trägerauschnitt und eines Türmodulträgers, der zur Anordnung auf dem Trägerausschnitt vorgesehen ist, anzugeben, welches eine effiziente Materialhutzung ermöglicht und bei dem der Türmodulträger auf einfache Weise gefertigt werden kann.

Gegenstand der Erfindung und Lösung der Aufgabe ist ein Verfahren zur Herstellung eines Türinnenbleches mit einem Trägerausschnitt und eines Türmodulträgers, der zur Anordnung auf dem Trägerausschnitt vorgesehen ist, wobei in einem Ziehprozess aus einem Blechzuschnitt ein umgeformtes Blechteil gebildet wird, wobei nach dem Ziehprozess ein Blechabschnitt des umgeformten Blechteils herausgetrennt wird, um aus dem Blechteil das Türinnenblech mit dem Trägerausschnitt zu bilden, wobei der Blechabschnitt bei dem Ziehprozess derart topfartig umgeformt wird, dass ein mittlerer Bereich, ein umgebogener Rand sowie zwischen dem mittleren Bereich und dem umgebogenen Rand eine wulstartige Ausformung gebildet werden, und wobei aus dem nach dem Ziehprozess herausgetrennten Blechabschnitt durch ein zumindest teilweises Abflachen der wulstartigen Ausformung und des umgebogenen Randes ein Türmodulträger gebildet wird, der gegenüber dem Trägerausschnitt ein Übermaß aufweist. Durch das Abflachen des zuvor umgebogenen Randes wird die von dem Türträgermodul abgedeckte Grundfläche größer. Die wulstartige Ausformung ist zweckmäßigerweise an dem gesamten Umfang umlaufend vorgesehen.

Während an den gerade verlaufenden Umfangsabschnitten lediglich ein Umbiegen des Bleches erfolgt, tritt an Kurven entlang des Umfanges bei einem konvexen Verlauf eine Dehnung und bei einem konkaven Verlauf eine Stauchung des Bleches auf. Problematisch sind deshalb insbesondere Eckbereiche, weil durch die Dehnung das Blech stark beansprucht und ausgedünnt wird und schließlich auch reißen kann. Zusätzlich steht in den Eckbereichen wegen der Vergrößerung des Radius auch alleine unter Berücksichtigung des umgebogenen Randes nicht genügend Material zur Verfügung, um ein ausreichendes Übermaß des Türmodulträgers gegenüber dem Trägerausschnitt bereitzustellen. An der wulstartigen Ausformung wird durch das dort in einem Bogen verlaufende Blech zusätzliches Material bereit gestellt. Bereits bei dem Ablachen der Wulst erfolgt eine gewisse Vergrößerung der Grundfläche, wobei zusätzlich weiteres Material zur Verfügung gestellt wird. Die Vergrößerung der Grundfläche durch ein Abflachen der Wulst bzw. wulstartigen Ausformung führt noch nicht zu übermäßigen Beanspruchungen des Bleches.

Der mittlere Bereich des herausgeschnittenen Blechabschnittes ist gemäß einer bevorzugten Ausgestaltung im Wesentlichen eben. In diesem mittleren Bereich können aber bereits gewisse Strukturen als funktionelle Bestandteile des herzustellenden Türmodulträgers vorhanden sein. Es besteht grundsätzlich die Möglichkeit, bestimmte Bereiche des Türmodulträgers bereits bei dem Ziehprozess des Blechzuschnittes in vorgegebener Weise umzuformen. Auch können bereits Öffnungen in den Blechabschnitt eingebracht werden. Da die Geometrieveränderungen bei dem Abflachen aber nicht immer exakt gleich sind, empfiehlt es sich, erst in einem abschließenden Schritt weitere Öffnungen in den Blechabschnitt einzubringen und/oder den Blechabschnitt zuzuschneiden. Insbesondere kann nach dem zumindest teilweisen Abflachen der Wulst und des Randes auch ein Kalibrieren des Blechabschnittes erfolgen, um eine genau Maßhaltigkeit des hergestellten Türmodulträgers zu erreichen.

An der wulstartigen Ausformung weist das Blech in einem Querschnitt üblicherweise zumindest einen Wendepunkt auf. Ausgehend von dem mittleren Bereich weist der Blechabschnitt nach dem Ziehprozess und vor dem Abflachen in Richtung des Randes üblicherweise eine Biegung in eine erste Richtung auf, um einen ersten Abschnitt der wulstartigen Ausformung zu bilden. An einem Wendepunkt ist das Blech dann in die andere Richtung umgebogen, um einen zweiten Teil der wulstartigen Ausformung sowie den umgebogenen Rand zu bilden. Es ergibt sich also eine Ausgestaltung, bei der die Wulst und der umgebogene Rand aus einer Fläche, in welcher der mittlere, üblicherweise im Wesentlichen ebene Bereich liegt, an gegenüberliegenden Seiten vorstehen.

Wie bereits zuvor erläutert, können gerade an Eckbereichen sehr große Dehnungen auftreten. Dennoch muss eine Beschädigung des Türmodulträgers vermieden werden. Aus diesem Grund erfolgt das zumindest teilweise Abflachen der Wulst und des Randes bevorzugt in mehreren Umformschritten, beispielsweise zwischen acht und drei Umformschritten. Dabei kann vorgesehen sein, dass in einem ersten Umformschritt die Wulst abgeflacht wird, um nachfolgend weiteres Material zur Verfügung zu stellen. Vorzugsweise wird die Wulst vollständig abgeflacht, so dass der mittlere, im Wesentlichen ebene Bereich sich dann auch dort erstreckt, wo zuvor die Wulst vorgesehen war. Zweckmäßigerweise sind danach noch mehrere Umformschritte vorgesehen, um sukzessive den Rand weiter abzuflachen und entsprechend die von dem Blechabschnitt abgedeckte Fläche zu vergrößern. Mehrere Umformschritte sind zweckmäßig, um in einem einzelnen Schritt eine zu starke Verformung und eine Beschädigung des Blechabschnittes an seinem Rand, insbesondere an Ecken, zu vermeiden.

Die weitere Handhabung und Montage des Türmodulträgers ist im Rahmen der Erfindung nicht eingeschränkt. Die Befestigung über dem Trägerausschnitt des Türinnenbleches kann beispielsweise durch Schrauben, Nieten oder dergleichen erfolgen. Entsprechende Befestigungslöcher werden in dem Türmodulträger bevorzugt nach dem Abflachen erzeugt.

Durch das erfindungsgemäße Verfahren kann der Blechabschnitt, der zur Bildung des Trägerausschnittes herausgeschnitten wird, genutzt werden. Die Materialausnutzung ist damit optimiert. Der Blechabschnitt wird durch Umformung auf das erforderliche Übermaß des Türmodulträgers gebracht, so dass lediglich einfache Schritte zur Materialumformung durchgeführt werden müssen. Die Verbindung mit einem zusätzlichen Material ist nicht erforderlich. Des Weiteren weist der einstückig vollständig aus Blech gefertigte Türmodulträger auch eine hohe Stabilität auf und kann damit im montierten Zustand eine Fahrzeugtür auf besonders vorteilhafte Weise verstärken. Zusätzlich können die in der Tür anzuordnenden Komponenten und Anbauteile ohne Weiteres an dem tragfähigen Türmodulträger aus Blech befestigt werden.

Der fertige Türmodulträger, d. h. der Blechabschnitt nach dem zumindest teilweisen Abflachen der wulstartigen Ausformung und des umgebogenen Randes weist an seinem Umfang im Querschnitt gesehen vorzugsweise eine S-Form auf, wobei der mittlere Bereich Umformgeometrien als Funktionsausformungen des Türmodulträgers aufweisen kann, darüber hinausgehend aber üblicherweise im Wesentlichen eben ist und wobei dann über die S-Form ein gleichfalls im Wesentlichen ebenes äußeres Ende anschließt, welches für eine gleichmäßige, großflächige Anlage an dem Türinnenblech vorgesehen ist.

Die Erfindung wird im Folgenden anhand einer lediglich ein Ausführungsbeispiel darstellenden Zeichnung erläutert. Es zeigen:
**Fig. 1a** ein aus einem Blechzuschnitt in einem Tiefziehprozess gebildetes umgeformtes Blechteil, aus dem nachfolgend ein Türinnenblech mit einem Trägerausschnitt und ein Trägermodul gebildet werden,
**Fig. 1b** das Blechteil gemäß der Fig. 1a in einer perspektivischen Ansicht,
**Fig. 2** ein aus dem Blechteil gemäß der Fig. 1a durch Heraustrennen eines Blechabschnittes gebildetes Türinnenblech mit einem Trägerausschnitt,
**Fig. 3** die schrittweise Abflachung des zuvor in dem Tiefziehprozess topfartig geformten Blechabschnitts,
**Fig. 4** einen Schnitt durch den Blechabschnitt vor dem Abflachen (dünn, durchgezogen), nach einem ersten Umformschritt (strichpunktiert) zum Abflachen sowie nach dem Abflachen (dick, durchgezogen).

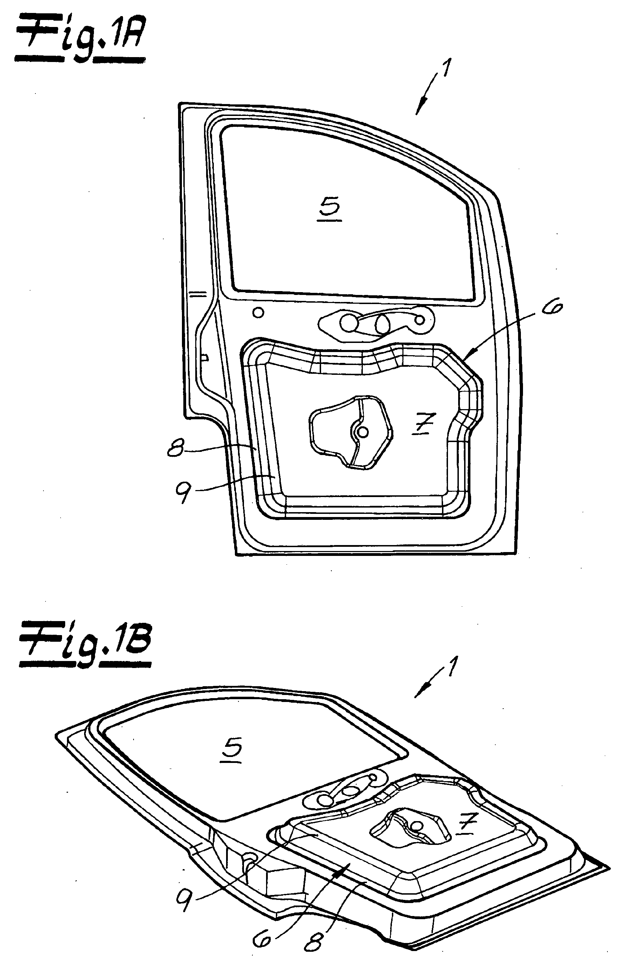

Die Fig. 1a zeigt ein Blechteil 1, welches zuvor in einem Tiefziehprozess aus einem Blechzuschnitt gebildet worden ist. Das umgeformte Blechteil 1 ist dazu vorgesehen, ein Türinnenblech 2 mit einem Trägerausschnitt 3 und einem Türmodulträger zur Anordnung auf dem Trägerausschnitt 3 zu bilden. Die Fig. 1 a zeigt das Blechteil nach dem bereits ein Fensterausschnitt 5 gebildet wurde. Der Fensterausschnitt 5 kann entweder unmittelbar in der Tiefziehform oder nachfolgend, beispielsweise durch ein Herausstanzen, gebildet werden.

Die Fig. 1b zeigt das Blechteil 1 gemäß der Fig. 1 a in einer perspektivischen Ansicht, wobei zu erkennen ist, dass ein Blechabschnitt 6, aus dem nachfolgend der Türmodulträger gebildet wird, bei dem Ziehprozess topfartig ausgeformt wurde. Die Topfform kann dabei entweder nach außen oder innen gezogen werden.

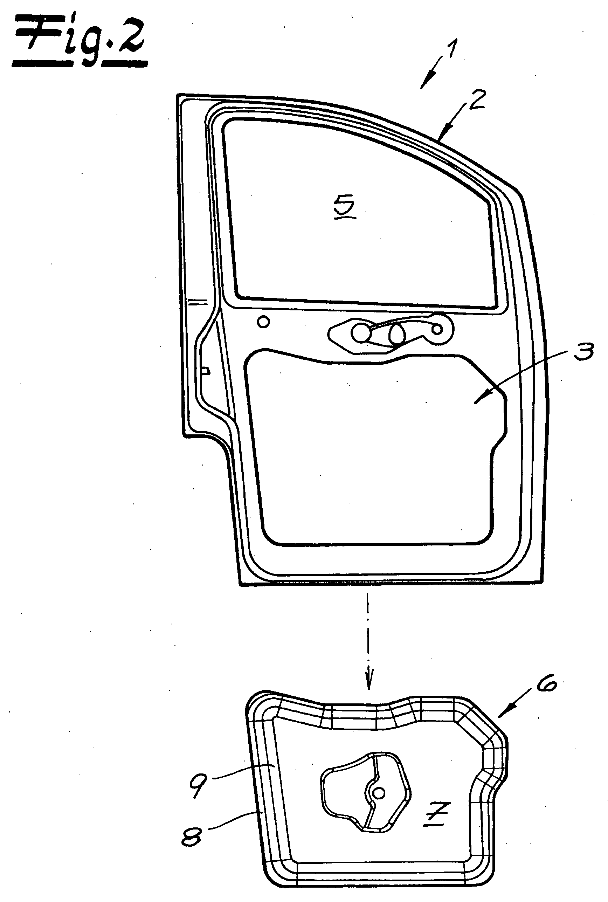

Wie der Fig. 2 zu entnehmen ist, wird nach dem Ziehprozess der Blechabschnitt 6 des umgeformten Blechteils 1 herausgetrennt, um aus dem Blechteil 1 das Türinnenblech 2 mit dem Trägerausschnitt 3 zu bilden.

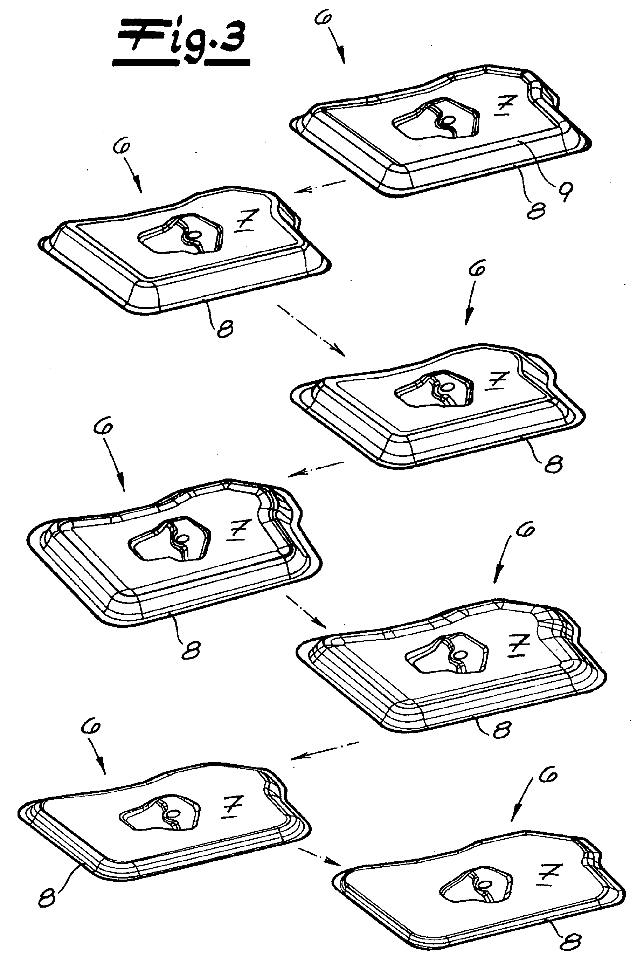

Der herausgetrennte Blechabschnitt 6 ist in der Fig. 3 dargestellt. Dieser Blechabschnitt 6 weist nach dem Ziehprozess einen mittleren Bereich 7, einen umgebogenen Rand 8 sowie zwischen dem mittleren Bereich 7 und dem umgebogenen Rand 8 eine wulstartige Ausformung 9 auf. Der mittlere Bereich 7 ist mit der für die Funktion eines Türmodulträgers erforderlichen Geometrie geformt und ist darüber hinausgehend im Wesentlichen eben.

Um aus dem Blechabschnitt 6 den Türmodulträger zu bilden, der gegenüber dem Trägerausschnitt 3 ein Übermaß aufweist, wird die wulstartige Ausformung 9 und der umgebogene Rand 8 sukzessive abgeflacht.

Gemäß der Fig. 3 sind hierzu exemplarisch sechs Umformschritte vorgesehen. Bei dem Umformen wird die von dem Blechabschnitt 6 abgedeckte Fläche vergrößert, wobei jedoch in den Eckbereichen erhebliche Dehnungen auftreten können. Um dabei ein Zerreißen zu vermeiden, ist eine Umformung in einer Vielzahl von Schritten vorteilhaft.

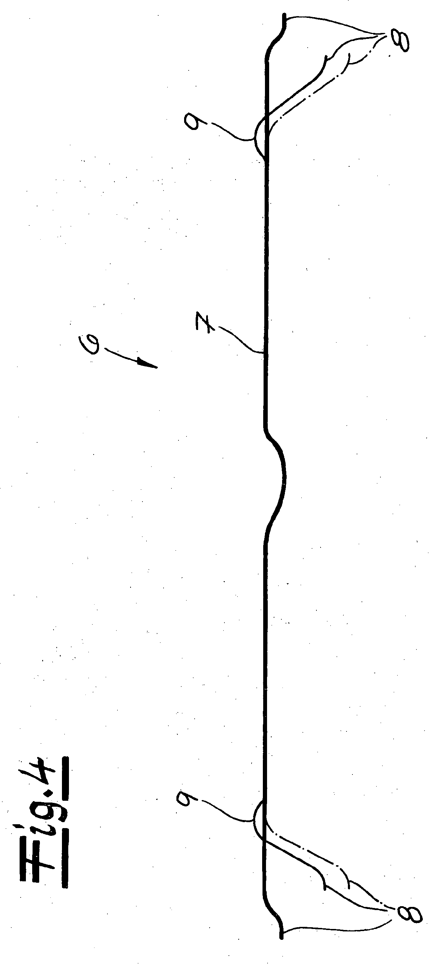

Ergänzend zu der Fig. 3 ist in der Fig. 4 der Blechabschnitt 6 nach dem Tiefziehvorgang und vor dem Abflachen (dünne, durchgezogene Linie), nach einem ersten Umformschritt zum Abflachen (strichpunktierte Linie) sowie nach dem Abflachen (dicke, durchgezogene Linie) dargestellt. Der umgebogene Rand 8 und die wulstartige Ausformung 9 weisen zusammen eine S-förmige Kontur mit zwei Wendepunkten auf. Dies ergibt sich daraus, dass im Bereich der wulstartigen Ausformung 9 das Blech im Querschnitt gesehen zunächst in eine Richtung gebogen ist, um einen ersten Abschnitt der wulstartigen Ausformung zu bilden und dann nach einer Änderung der Krümmungsrichtung einen zweiten Abschnitt der wulstartigen Ausformung 9 und einen Teil des umgebogenen Randes 8 bildet. Da der Blechabschnitt 6 aus dem umgeformten Blechteil 1 herausgeschnitten ist und das Blechteil 1 um den Blechabschnitt 6 herum üblicherweise eben oder im Wesentlichen eben ist, läuft der umgebogene Rand 8 nach außen entsprechend de zu bildenden Überdeckungsgeometrie (Anschraubfläche) aus.

Einer vergleichenden Betrachtung der Fig. 3 mit der Fig. 4 ist zu entnehmen, dass gemäß einer bevorzugten Ausgestaltung des erfindungsgemäßen Verfahrens in einem ersten Umformschritt die wulstartige Ausformung 9 abgeflacht, vorzugsweise vollständig abgeflacht wird. Dadurch wird bereits zusätzliches Material zur Verfügung gestellt, welches gerade in den Eckbereichen die bei den nachfolgenden Umformschritten notwendigen Materialreserven zur Verfügung stellt.

In den nachfolgenden Umformschritten wird der umgebogene Rand 8 sukzessive weiter abgeflacht, wodurch die von dem Blechabschnitt 6 abgedeckte Fläche vergrößert wird. Der Blechabschnitt 6 hat schließlich gegenüber dem Trägerausschnitt 3 des Türinnenbleches 2 ein ausreichendes Übermaß, um dort befestigt zu werden. Zur Befestigung können beispielsweise Schrauben, Nieten, Schweißpunkte oder dergleichen vorgesehen werden.

Um schließlich aus dem in der Fig. 3 dargestellten Blechabschnitt 6 den Türmodulträger zu bilden, ist üblicherweise noch abschließend ein Kalibrieren der Endform, d. h. ein Nachpressen zur Reduzierung von Maßabweichungen sowie weitere Arbeitsschritte wie Abkanten, Hochstellen oder Durchstellen vorgesehen. Danach können noch ein umlaufender Beschnitt und ein Lochen des Trägermoduls vorgesehen sein. Löcher oder vergleichbare Öffnungen in dem Türmodulträger können dazu vorgesehen werden, den Türmodulträger an dem Türinnenblech 2 zu befestigen und/oder eine Befestigung verschiedener Komponenten und Anbauteile auf dem Türmodulträger zu ermöglichen.

## Patentansprüche

1. Verfahren zur Herstellung eines Türinnenbleches (2) mit einem Trägerausschnitt (3) und eines Türmodulträgers, der zur Anordnung auf dem Türinnenblech (2) in zumindest bereichsweiser Überdeckung des Trägerausschnitts (3) vorgesehen ist,
wobei in einem Ziehprozess aus einem Blechzuschnitt ein umgeformtes Blechteil (1) gebildet wird,
wobei nach dem Ziehprozess ein Blechabschnitt (6) des umgeformten Blechteils (1) herausgetrennt wird, um aus dem Blechteil (1) das Türinnenblech (2) mit dem Trägerausschnitt (3) zu bilden, **dadurch gekennzeichnet, dass**
der Blechabschnitt (6) bei dem Ziehprozess derart topfartig umgeformt wird, dass ein mittlerer Bereich (7), ein umgebogener Rand (8) sowie zwischen dem mittleren Bereich (7) und dem umgebogenen Rand (8) eine wulstartige Ausformung (9) gebildet werden und
dass aus dem nach dem Ziehprozess herausgetrennten Blechabschnitt (6) durch ein zumindest teilweises Abflachen der wulstartigen Ausformung (9) und des umgebogenen Randes (8) ein Türmodulträger gebildet wird, der gegenüber dem Trägerausschnitt (3) ein Übermaß aufweist.

2. Verfahren nach Anspruch 1, wobei der mittlere Bereich (7) im Wesentlichen eben geformt wird.

3. Verfahren nach Anspruch 1 oder 2, wobei die wulstartige Ausformung (9) und der umgebogene Rand (8) aus einer Fläche, in welcher der mittlere Bereich (7) liegt, an gegenüberliegenden Seiten vorstehend geformt werden.

4. Verfahren nach einem der Ansprüche 1 bis 3, wobei die Krümmung des Bleches im Bereich der wulstartigen Ausformung (9) einen Wendepunkt aufweist.

5. Verfahren nach einem der Ansprüche 1 bis 4, wobei das zumindest teilweise Abflachen der wulstartigen Ausformung (9) und des Randes (8) in mehreren Umformschritten erfolgt.

6. Verfahren nach Anspruch 5, wobei in einem ersten Umformschritt die wulstartige Ausformung (9) abgeflacht wird.

7. Verfahren nach einem der Ansprüche 1 bis 6, wobei der Blechabschnitt nach dem zumindest teilweisen Abflachen der wulstartigen Ausformung (9) und des Randes (8) kalibriert wird.

8. Verfahren nach einem der Ansprüche 1 bis 7, wobei der Blechabschnitt (6) nach dem zumindest teilweisen Abflachen der wulstartigen Ausformung (9) und des Randes (8) zugeschnitten und/oder mit Öffnungen versehen wird.

## Claims

1. A method for manufacturing an inner door panel (2) with a mounting cutout (3) and a door module mounting that is designed for being arranged on the inner door panel (2) such that it overlaps the mounting cutout (3) at least in certain areas,
wherein a formed sheet metal part (1) is produced of a sheet metal blank in a drawing process, and
wherein a sheet metal section (6) of the formed sheet metal part (1) is cut out after the drawing process in order to produce the inner door panel (2) with the mounting cutout (3) of the sheet metal part (1), **characterized in that**
the sheet metal section (6) is formed in a pot-like fashion during the drawing process such that a central region (7), a bent edge (8) and a bead-like formation (9) lying between the central region (7) and the bent edge (8) are produced, and **in**
**that** a door module mounting, which has an oversize referred to the mounting cutout (3), is produced of the sheet metal section (6) cut out after the drawing process by at least partially flattening the bead-like formation (9) and the bent edge (8).

2. The method according to claim 1, wherein the central region (7) is essentially formed plane.

3. The method according to claim 1 or 2, wherein the bead-like formation (9) and the bent edge (8) are formed of a surface, in which the central region (7) lies, such that they protrude on opposite sides.

4. The method according to one of claims 1 to 3, wherein the curvature of the metal sheet has an inflection point in the region of the bead-like formation (9).

5. The method according to one of claims 1 to 4, wherein the at least partial flattening of the bead-like formation (9) and the edge (8) is carried out in multiple forming steps.

6. The method according to claim 5, wherein the bead-like formation (9) is flattened in a first forming step.

7. The method according to one of claims 1 to 6, wherein the sheet metal section is calibrated after the at least partial flattening of the bead-like formation (9) and the edge (8).

8. The method according to one of claims 1 to 7, wherein the sheet metal section (6) is cut to size and/or provided with openings after the at least partial flattening of the bead-like formation (9) and the edge (8).

## Revendications

1. Procédé de fabrication d'une tôle intérieure de porte (2) comportant une échancrure support (3) et un support de module de porte qui est prévu pour être disposé sur la tôle intérieure de porte (2) en recouvrant du moins par endroits l'échancrure support (3),
dans lequel, dans un processus d'étirage, une pièce en tôle façonnée (1) est composée à partir d'une découpe de tôle,
dans lequel, après le processus d'étirage, une section de tôle (6) de la pièce en tôle façonnée (1) est coupée pour constituer à partir de la pièce en tôle (1) la tôle intérieure de la porte (2) comportant l'échancrure support (3), **caractérisé en ce que**
la section de tôle (6) est déformée en forme de marmite lors du processus d'étirage de manière à ce qu'une zone centrale (7), un bord recourbé (8) soit formé, de même que soit formée entre la zone centrale (7) et le bord recourbé (8) une proéminence en forme de bourrelet (9) et que,
à partir de la section de tôle coupée après le processus d'étirage (6), par un aplatissement au moins partiel de la proéminence en forme de bourrelet (9) et du bord recourbé (8), il soit constitué un support de module de porte dont les dimensions sont supérieures à celles de l'échancrure support (3).

2. Procédé selon la revendication 1, dans lequel la zone centrale (7) est sensiblement façonnée à plat.

3. Procédé selon la revendication 1 ou 2, dans lequel la proéminence en forme de bourrelet (9) et le bord recourbé (8) sont façonnés dans une surface dans laquelle se trouve la zone centrale (7) de manière à être proéminents sur des faces opposées.

4. Procédé selon une des revendications 1 à 3, dans lequel la courbure de la tôle au niveau de la proéminence en forme de bourrelet (9) présente un point d'inversion.

5. Procédé selon une des revendications 1 à 4, dans lequel l'aplatissement au moins partiel de la proéminence en forme de bourrelet (9) et du bord (8) est réalisé en plusieurs étapes de façonnage.

6. Procédé selon la revendication 5, dans lequel la proéminence en forme de bourrelet (9) est aplatie pendant une première étape de façonnage.

7. Procédé selon une des revendications 1 à 6, dans lequel la section de tôle est calibrée après l'aplatissement au moins partiel de la proéminence en forme de bourrelet (9) et du bord (8).

8. Procédé selon une des revendications 1 à 7, dans lequel la section de tôle (6) est découpée et/ou pourvue d'orifices après l'aplatissement au moins partiel de la proéminence en forme de bourrelet (9) et du bord (8).
